(19) Europäisches Patentamt
European Patent Office
Office européen des brevets

(11) **EP 4 130 670 A1**

(12) **EUROPEAN PATENT APPLICATION**
published in accordance with Art. 153(4) EPC

(43) Date of publication:
**08.02.2023 Bulletin 2023/06**

(21) Application number: **20926456.3**

(22) Date of filing: **18.08.2020**

(51) International Patent Classification (IPC):
**G01C 21/32** (2000.01)   **G06F 17/00** (1995.01)
**B60W 40/076** (2012.01)

(52) Cooperative Patent Classification (CPC):
**B60W 40/076; G01C 9/00; G01C 21/28;
G01C 21/32; G01S 19/42; G06F 17/00**

(86) International application number:
**PCT/CN2020/109684**

(87) International publication number:
**WO 2021/189755 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2020 CN 202010211479**

(71) Applicant: **Xiamen Yaxon Networks Co., Ltd.
Xiamen, Fujian 361000 (CN)**

(72) Inventors:
• **TU, Yankai**
  **Xiamen, Fujian 361000 (CN)**
• **ZHOU, Hejie**
  **Xiamen, Fujian 361000 (CN)**

(74) Representative: **Hofmann, Andreas
RGTH
Patentanwälte PartGmbB
Postfach 33 02 11
80062 München (DE)**

(54) **SLOPE POINT SCREENING METHOD, TERMINAL DEVICE, MEDIUM AND SLOPE CALCULATION METHOD AND SYSTEM**

(57)    The present disclosure relates to a method, a terminal device and a medium for screening gradient points, and a method and a system for calculating a gradient. The method for screening gradient points includes: screening, from the electronic horizon data, the gradient points whose first-order derivatives relative to road offset values are greater than or equal to a derivative threshold, as first-level gradient points; and screening, from the first-level gradient points, second-level gradient points according to a difference between the road offset values corresponding to two adjacent first-level gradient points, as discrete gradient points after screened. In the method for calculating a gradient, the gradient values of the gradient points between adjacent discrete gradient points are recalculated according to the gradient value of each discrete gradient point and the corresponding road offset value. The present disclosure greatly simplifies the number of forward road gradient points to be directly obtained, maintains the original shape of the road gradient. The process is simple, requires less hardware resources, and is suitable for vehicle use.

Screening out from the electronic horizon data that the slope point of which the first derivative with respect to the road offset value is greater than or equal to the derivative threshold value is a first-order slope point.

From said first grade slope point, a second grade slope point is screened out according to a difference value of road offset values corresponding to two adjacent first grade slope points, and the second grade slope point is taken as a screened discrete slope point.

**FIG. 2**

**Description**

**TECHNICAL FIELD**

The present disclosure relates to the field of gradient calculation, and in particular to, a method, a terminal device, a medium for screening gradient points, and a method and a system for calculating a gradient.

**BACKGROUND**

Electronic horizon technology refers to relying on map data and global positioning system (GPS) to provide vehicles with accurate information on the road ahead, such that the vehicle has the ability to predict the road conditions ahead, help the vehicle to achieve predictive control, such that safer and more reliable effects can be realized, with fuel saving and the like.

The gradient is one of the most important information on the road. According to the gradient ahead, the vehicle can be controlled to accelerate and decelerate in advance to reduce energy consumption, and it can also provide safety driving prompts or pre-open the retarder and other safety controls according to the long downhill road ahead.

Due to a large number of electronic control units (ECUs) that may be installed on the vehicle and related to gradient ahead control, it is unlikely that a separate set of map data will be installed on each electronic control unit. The ideal way is to generate forward gradient data by a dedicated vehicle-mounted device with an electronic map, and then broadcast the data to other electronic control units that need it. Since on the vehicle, the electronic control units communicate with each other through the CAN bus, the most ideal way is to send the information to the electronic control units by broadcasting through the CAN bus.

However, the electronic map data is very huge, and the load of the CAN bus is limited, and the CAN bus capacity of a general commercial vehicle is only 250~500kbps. In the electronic map data, roads exist in the form of point sets. If every point in the road ahead and the corresponding gradient of the point are broadcast from the bus, it will greatly exceed the load capacity of the bus, resulting in congestion of the bus and delay of the signal, or even paralysis of the entire vehicle bus network. However, if the road gradient points are diluted at equal intervals, the details of the road gradient change may not be reflected. Another kind of method regards the gradient ahead as a curve, and uses the method of control point fitting or spline curve to represent. This kind of method is more complicated to calculate and analyze, and is not suitable for the vehicle electronic control unit with limited resources.

Therefore, it is necessary to provide a relatively optimized and simple data representation method to ensure that the gradient information ahead can be broadcast on the vehicle bus with a relatively small amount of data, and the electronic control unit that receives the data can easily and accurately reconstruct the geographic gradient information ahead.

**DISCLOSURE OF THE INVENTION**

In order to solve the above problems, the present disclosure provides a method, a terminal device, a medium for screening gradient points, and a method and a system for calculating a gradient.

The specific solutions are as follows:

A method for screening gradient points based on electronic horizon data, comprising steps of:

screening, from the electronic horizon data, the gradient points whose first-order derivatives relative to road offset values are greater than or equal to a derivative threshold, as first-level gradient points; and

screening, from the first-level gradient points, second-level gradient points according to a difference between the road offset values corresponding to two adjacent first-level gradient points, as discrete gradient points after screened.

In an embodiment, the method comprises: screening the first-level gradient points that the difference between the road offset values corresponding to the two adjacent first-level gradient points is not a fixed offset interval as the second-level gradient points.

In an embodiment, the method comprises: forming a recursive interval by the first-level gradient points that the difference between the road offset values corresponding to the two adjacent first-level gradient points is the fixed offset interval; calculating a difference between a linear gradient value and an actual gradient value of a first-level gradient point in the recursive interval; and screening the second-level gradient points.

In an embodiment, when the difference of all first-level gradient points in the recursive interval is less than a difference threshold, a first first-level gradient point and a last first-level gradient point in the recursive interval are set as the second-level gradient points.

In an embodiment, when the difference between the first-level gradient points in the recursive interval is greater than or equal to the difference threshold, the recursive interval is divided into two sub-recursive intervals by using a gradient point with a largest difference in the recursive interval as a cut-point, and the difference between the linear gradient value and the actual gradient value of the first-level gradient point in each sub-recursive interval is calculated;

when the difference between all the first-level gradient points in the sub-recursive interval is less than the difference threshold, the first first-level gradient point and the last first-level gradient point in the sub-recursive interval are set as the second-level gradient points;

when the difference between the first-level gradient points in the recursive interval is greater than or equal to the difference threshold, dividing and recurving are continued.

In an embodiment, a calculation formula of the linear gradient value of the gradient point is:

$$y_i = \frac{s_m - s_1}{o_m - o_1} x_i - \frac{s_m - s_1}{o_m - o_1} o_1 + s_1$$

where, subscript i=1 ,2,...,m represents a serial number of each gradient point in the recursive interval sorted according a corresponding road offset value; m represents a total number of the gradient points in the recursive interval; $y_i$ represents the first linear gradient value of an i-th gradient point; $x_i$ represents the road offset value corresponding to the i-th gradient point; $s_1$ and $s_m$ represent the actual gradient values of the first and an m-th gradient points, respectively, $o_1$ and $o_m$ represent the first road offset values corresponding to the first and the m-th gradient points, respectively.

In an embodiment, the derivative threshold is less than 0.01.

In an embodiment, the difference threshold is less than 0.1.

A terminal device, comprising a processor, a memory, and a computer program stored in the memory and executed on the processor, wherein when the computer program is executed on the processor, the steps of the method for screening gradient points based on electronic horizon data provided by Embodiment 1 according to the present disclosure are implemented.

A computer-readable storage medium storing a computer program, wherein: when the computer program is executed by a processor, the steps of the method for screening gradient points based on electronic horizon data provided by Embodiment 1 according to the present disclosure are implemented.

A method for calculating a gradient based on discrete gradient points, comprising:

collecting, by a central control terminal, electronic horizon data;

sending the discrete gradient points to each electronic control unit, after screening all the gradient points in the electronic horizon data as the discrete gradient points according to the method for screening gradient points based on electronic horizon data provided by Embodiment 1 according to the present disclosure;

recalculating the gradient values of the gradient points between adjacent discrete gradient points according to the gradient value of each discrete gradient point and the corresponding road offset value, after receiving, by the each electronic control unit, the discrete gradient points.

In an embodiment, a calculation method for recalculating the gradient values of the gradient points between adjacent discrete gradient points is:

calculating a linear gradient value of each gradient point based on a linear relationship of the each gradient point between the adjacent discrete gradient points; and

taking the linear gradient value as the gradient value of the each gradient point.

In an embodiment, a calculation formula for recalculating the linear gradient value of the each gradient point between the adjacent discrete gradient points is:

$$y = \frac{s_b - s_a}{o_b - o_a} x - \frac{s_b - s_a}{o_b - o_a} o_a + s_a$$

where, y represents the linear gradient value of the each gradient point to be calculated; x represents the road offset value corresponding to the each gradient point to be calculated; $s_a$ and $s_b$ respectively represent the actual gradient values of two adjacent discrete gradient points; $o_a$ and $o_b$ respectively represent the road offset values corresponding to the two adjacent discrete gradient points.

A system for calculating a gradient based on discrete gradient points, comprising a central control terminal and a plurality of electronic control units, wherein the central control terminal and each electronic control unit comprise a memory, a processor, a data transmission module and a computer program stored in the memory and executed on the processor;

after electronic horizon data is received by the central control terminal through the data transmission module, the computer program stored in a corresponding memory is executed by the processor in the central control terminal, such that the method for screening gradient points based on electronic horizon data provided by Embodiment 1 according to the present disclosure is implemented, for screening all the gradient points in the electronic horizon data as the discrete gradient points, and then sending the discrete gradient points to the each electronic control unit through the data transmission module;

after each discrete gradient point is received by the electronic control unit through the data transmission module, the computer program stored in the corresponding memory is executed by the processor in the central control terminal, such that the gradient value of the gradient point between the adjacent discrete gradient points is recalculated, according to the gradient value of each discrete gradient point and a corresponding road offset value.

The above technical solutions adopted by the present disclosure can greatly simplifies the number of road gradient points to be obtained directly, maintain the original shape of the road gradient. The process is simple, requires few hardware resources, and is suitable for vehicle use.

## BRIEF DESCRIPTION OF DRAWINGS

FIG. 1 is a schematic diagram illustrating electronic horizon data in Embodiment 1 according to the present disclosure.
FIG. 2 shows a flowchart of the present embodiment.

## DESCRIPTION OF EMBODIMENTS

To further illustrate the various embodiments, the present disclosure is provided with the accompanying drawings. These drawings are a part of the present disclosure, which are mainly used to illustrate the embodiments, and can be used in conjunction with the relevant description of the specification to explain the operation principles of the embodiments. With reference to these contents, other possible embodiments and advantages of the present disclosure will be understood by one of ordinary skill in the art.

The present disclosure will now be further described with reference to the accompanying drawings and specific embodiments.

Embodiment 1:

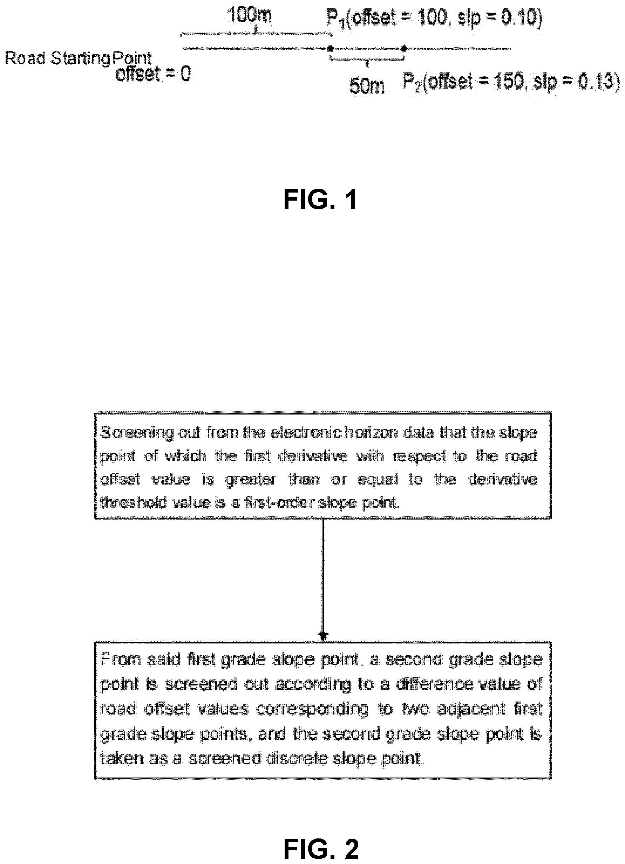

As shown in FIG. 1, it is a schematic diagram illustrating the electronic horizon data, and for each gradient point (such as $P_1$, $P_2$), the road offset values from the starting point of the road (represented by the values of the parameter offset in the figures) and the actual gradient values (represented by the values of the parameter sip in the figures) are included.

The road gradient ahead broadcast by the existing electronic horizon system are a series of consecutive gradient points at equal intervals (e.g, the interval is 5 meters), that is, the differences between the road offset values between two adjacent gradient points are equal. The embodiment of the present disclosure provides a method for screening gradient points based on electronic horizon data, such that the existing continuous gradient points with a fixed offset interval can be screened, which not only reduces the number and density of the gradient points, but also more accurately maintains the shape of the original road gradient.

As shown in FIG. 2, the method of the present embodiment may include the following steps: screening, from the electronic horizon data, the gradient points whose first-order derivatives relative to road offset values are greater than or equal to a derivative threshold, as first-level gradient points; and screening, from the first-level gradient points, second-level gradient points according to a difference between the road offset values corresponding to two adjacent first-level gradient points, as discrete gradient points after screened.

It should be noted that the adjacent gradient points in the first-level gradient points refer to that after the first-level gradient points are sorted in the order of the corresponding road offset values, the gradient points with adjacent serial numbers are taken as the adjacent gradient points.

(1) The method for screening the first-level gradient points may be as follows: screening the gradient points whose first-order derivatives are greater than or equal to the derivative threshold in the electronic horizon data as the first-level gradient points.

The derivative threshold may be a minimum value. In the present embodiment, the derivative threshold may be set to be less than 0.01. A gradient point smaller than the derivative threshold indicates that the road gradient corresponding to the gradient point has little change relative to the road offset, so the gradient value corresponding to the gradient point can be represented by a fixed gradient value.

In the present embodiment, the calculation formula of the first derivative Di of the i-th gradient point Pi with respect to the road offset value is:

$$D_i=(s_i-s_{i-1})/(o_i-o_{i-1});$$

where, $s_i$ and $s_{i-1}$ represent the actual gradient values of the i-th and i-1-th gradient points, respectively; $o_i$ and $o_{i-1}$ represent the road offset values of the i-th and i-1-th gradient points, respectively; the i-1-th gradient point is the adjacent gradient point of the i-th gradient point, that is, the gradient point whose road offset value difference corresponding to the i-th gradient point is a fixed offset interval L.

(2) The screening principle of the second-level gradient points is to screen the first-level gradient points that the difference between the road offset values corresponding to the two adjacent first-level gradient points is not a fixed offset interval as the second-level gradient points.

Screening not for fixed offset intervals is processed by forming a recursive interval. That is, a recursive interval may be formed by the first-level gradient points that the difference between the road offset values corresponding to the two adjacent first-level gradient points is the fixed offset interval; a difference between a linear gradient value and an actual gradient value of a first-level gradient point in the recursive interval is calculated; and the second-level gradient points are screened.

When the difference between the first-level gradient points in the recursive interval is greater than or equal to the difference threshold, the recursive interval is divided into two sub-recursive intervals by using a gradient point with a largest difference in the recursive interval as a cut-point, and the difference between the linear gradient value and the actual gradient value of the first-level gradient point in each sub-recursive interval is calculated. When the difference between all the first-level gradient points in the sub-recursive interval is less than the difference threshold, the first first-level gradient point and the last first-level gradient point in the sub-recursive interval are set as the second-level gradient points. When the difference between the first-level gradient points in the recursive interval is greater than or equal to the difference threshold, dividing and recurving are continued.

The specific screening process in the present embodiment may include the following steps:

S11: determining, for all the first-level gradient points, whether a gradient point with a fixed offset interval between the road offset values corresponding to two adjacent gradient points exists; if so, forming the recursive interval by the first-level gradient points that the difference between the road offset values corresponding to the two adjacent first-level gradient points is the fixed offset interval, and setting all the gradient points whose difference between the road offset values corresponding to any other first-level gradient point is not the fixed offset interval as the second-level gradient points; then entering S12; otherwise, setting all first-level gradient points as the second-level gradient points.

S12: calculating, for each recursive interval, a difference between a linear gradient value and an actual gradient value of each first-level gradient point therein; and setting a first and a last first-level gradient points in the recursive interval as the second-level gradient points when the difference of all gradient points in the recursive interval is less than a difference threshold; otherwise, entering S13.

For example, for a series of adjacent gradient points $p_1$, $p_2$, ..., $p_m$, the difference between the corresponding road offset values is a fixed offset interval L (that is, the series of gradient points are connected together according to the fixed offset interval L), a recursive interval may be formed by the series of the adjacent gradient points, and they may be reordered according to the difference between the corresponding road offset values. Then the calculation formula of the linear gradient value of each gradient point in the recursive interval is:

$$y_i = \frac{s_m - s_1}{o_m - o_1} x_i - \frac{s_m - s_1}{o_m - o_1} o_1 + s_1$$

(1)

where, the subscript i=1 ,2,...,m represents a serial number of each gradient point in the recursive interval sorted according the corresponding road offset value; m represents a total number of the gradient points in the recursive interval; $y_i$ represents the first linear gradient value of an i-th gradient point; $x_i$ represents the road offset value corresponding to the i-th gradient point; $s_1$ and $s_m$ represent the actual gradient values of the first and an m-th gradient points, respectively, $o_1$ and $o_m$ represent the first road offset values corresponding to the first and the m-th gradient points, respectively.

The actual gradient value may be a value stored in the electronic horizon system.

In the present embodiment, the difference threshold may be set to be less than 0.1. A small difference indicates that the difference between the linear gradient value calculated through the linear relationship and the actual gradient value is small. The actual gradient value of the gradient point can be approximately replaced by the linear gradient value.

S13: dividing the recursive interval into two sub-recursive intervals by using a gradient point with a largest difference in the recursive interval as a cut-point; returning to S12 until all the recursive intervals are processed.

If the point with the largest difference in the recursive interval is pk, the two divided sub-recursive intervals may be $[p_m, p_k]$ and $[p_k, p_m]$ respectively.

In the present embodiment, the continuous gradient points are screened as discrete gradient points that can represent the original gradient curve, and the discrete gradient points are points with unequal intervals, such that the number of points can be greatly reduced, and strong support can be provided for subsequent gradient recalculation work.

Embodiment 2:

The present disclosure further provides a terminal device, including a memory, a processor, and a computer program stored in the memory and executed on the processor, and when the computer program is executed on the processor, the steps of the method provided by Embodiment 1 according to the present disclosure are implemented.

Further, as an executable solution, the terminal device may be a computing device such as a vehicle-mounted computer and a cloud server. The terminal device may include, but is not limited to, a processor and a memory. Those skilled in the art can understand that the composition structure of the above terminal device is only an example of the terminal device, and does not constitute a limitation on the terminal device, and may include more or fewer components than the above, or combine some components, or different components. For example, the terminal device may further include an input/output device, a network access device, a bus, etc., which is not limited in the present embodiment of the present disclosure.

Further, as an executable solution, the so-called processor may be a central processing unit (CPU), and may also be other general-purpose processors, digital signal processors (DSP), application specific integrated circuit (ASIC), field-programmable gate array (FPGA) or other programmable logic devices, discrete gate or transistor logic devices, discrete hardware components, etc. The general-purpose processor can be a microprocessor or the processor can also be any conventional processor, etc. The processor may be the control center of the terminal device, and uses various interfaces and lines to connect various parts of the entire terminal device.

The memory can be used to store the computer program and/or module. The processor implements the computer programs and/or modules stored in the memory, and calling the data stored in the memory, various functions of the terminal device. The memory may mainly include a program storing area and a data storing area. Among them, the program storing area may store an operating system and an application program required for at least one function; the data storing area may store data created according to the use of the mobile phone, and the like. In addition, the memory may include high-speed random access memory, and may also include non-volatile memory such as hard disc, internal memory, plug-in hard disc, smart media card (SMC), secure digital (SD) card, flash card, at least one magnetic disc storage device, flash memory device, or other volatile solid-state storage device.

The present disclosure further provides a computer-readable storage medium, wherein a computer program is stored in the computer-readable storage medium, and when the computer program is executed by a processor, the steps of the foregoing method provided by Embodiment 1 according to the present disclosure are implemented.

If the modules/units integrated in the terminal device are implemented in the form of software functional units and sold or used as independent products, they may be stored in a computer-readable storage medium. Based on this understanding, the present disclosure can implement all or part of the processes in the methods of the above embodiments, and can also be completed by instructing relevant hardware through a computer program. The computer program can be stored in a computer-readable storage medium. When the program is executed by the processor, the steps of the foregoing method in the embodiments can be implemented. Wherein, the computer program may include computer program code, and the computer program code may be in the form of source code, object code, executable file or some intermediate form, and the like. The computer-readable medium may include: any entity or device capable of carrying the computer program code, a recording medium, a U disc, a removable hard disc, a magnetic disc, an optical disc, a computer memory, a read-only memory (ROM), random access memory (RAM), software distribution media, and the like.

Embodiment 3:

The present disclosure also provides a method for calculating a gradient based on discrete gradient points, the method may include:

collecting, by a central control terminal, electronic horizon data;
sending the discrete gradient points to each electronic control unit, after screening all the gradient points in the electronic horizon data as the discrete gradient points according to the method for screening gradient points based on electronic horizon data provided by Embodiment 1 according to the present disclosure;
recalculating the gradient values of the gradient points between adjacent discrete gradient points according to the gradient value of each discrete gradient point and the corresponding road offset value, after receiving, by the each electronic control unit, the discrete gradient points.

The calculation formula for recalculating the linear gradient value of gradient points between adjacent discrete gradient points is:

$$y = \frac{s_b - s_a}{o_b - o_a} x - \frac{s_b - s_a}{o_b - o_a} o_a + s_a$$

where, y represents the linear gradient value of the each gradient point to be calculated; x represents the road offset value corresponding to the each gradient point to be calculated; $s_a$ and $s_b$ respectively represent the actual gradient values of two adjacent discrete gradient points; $o_a$ and $o_b$ respectively represent the road offset values corresponding to the two adjacent discrete gradient points.

In the actual driving process, according to the current road offset value of the vehicle, the road offset value of a certain gradient point can be subtracted from the current road offset value of the vehicle itself. That is, it can be known how far the distance is from a certain gradient point, and how much degrees the gradient has.

The method of the present embodiment can greatly simplify the number of road gradient points that need to be directly obtained, and maintain the original shape of the road gradient. The process is simple, requires few hardware resources, and is suitable for vehicle use.

Embodiment 4:

The present disclosure also provides a system for calculating a gradient based on discrete gradient points, comprising a central control terminal and a plurality of electronic control units, wherein the central control terminal and each electronic control unit comprise a memory, a processor, a data transmission module and a computer program stored in the memory and executed on the processor.

After electronic horizon data is received by the central control terminal through the data transmission module, the computer program stored in a corresponding memory is executed by the processor in the central control terminal, such that the method for screening gradient points based on electronic horizon data according to any one of claims 1 to 8 is implemented, for screening all the gradient points in the electronic horizon data as the discrete gradient points, and then sending the discrete gradient points to the each electronic control unit through the data transmission module.

After each discrete gradient point is received by the electronic control unit through the data transmission module, the computer program stored in the corresponding memory is executed by the processor in the central control terminal, such that the gradient value of the gradient point between the adjacent discrete gradient points is recalculated, according to the gradient value of each discrete gradient point and a corresponding road offset value.

Further, as an executable solution, the central control terminal may be a central control terminal on a vehicle, and the electronic control unit may be other vehicle-mounted electronic control units that are connected to the central control terminal through a CAN bus to implement different functions. Both the central control terminal and the electronic control unit may include, but are not limited to, a processor and a memory. Those skilled in the art can understand that the above-mentioned structures of the central control terminal and the electronic control unit are only examples of the central control terminal and the electronic control unit, and do not constitute a limitation on the central control terminal and the electronic control unit, which may include more or fewer components, or a combination of some components, or different components. For example, the central control terminal and the electronic control unit may further include input/output devices, network access devices, buses, etc., which is not limited in the present embodiment according to the present disclosure.

Although the present disclosure has been particularly shown and described in connection with preferred embodiments, it will be understood by those skilled in the art that various changes in form and detail may be made to the present disclosure without departing from the spirit and scope of the present disclosure as defined by the appended claims. All the various changes fall within the protection scope of the present disclosure.

**Claims**

1. A method for screening gradient points based on electronic horizon data, comprising steps of:

   screening, from the electronic horizon data, the gradient points whose first-order derivatives relative to road offset values are greater than or equal to a derivative threshold, as first-level gradient points; and
   screening, from the first-level gradient points, second-level gradient points according to a difference between the road offset values corresponding to two adjacent first-level gradient points, as discrete gradient points after screened.

2. The method for screening gradient points based on electronic horizon data according to claim 1, comprising: screening the first-level gradient points that the difference between the road offset values corresponding to the two adjacent first-level gradient points is not a fixed offset interval as the second-level gradient points.

3. The method for screening gradient points based on electronic horizon data according to claim 1, comprising:

   forming a recursive interval by the first-level gradient points that the difference between the road offset values corresponding to the two adjacent first-level gradient points is the fixed offset interval;
   calculating a difference between a linear gradient value and an actual gradient value of a first-level gradient point in the recursive interval; and
   screening the second-level gradient points.

4. The method for screening gradient points based on electronic horizon data according to claim 3, wherein, when the difference between all the first-level gradient points in the recursive interval is less than a difference threshold, the first first-level gradient point and the last first-level gradient point in the recursive interval are set as the second-level gradient points.

5. The method for screening gradient points based on electronic horizon data according to claim 3, wherein, when the difference between the first-level gradient points in the recursive interval is greater than or equal to the difference threshold, the recursive interval is divided into two sub-recursive intervals by using a gradient point with a largest difference in the recursive interval as a cut-point, and the difference between the linear gradient value and the actual gradient value of the first-level gradient point in each sub-recursive interval is calculated;

   when the difference between all the first-level gradient points in the sub-recursive interval is less than the difference threshold, the first first-level gradient point and the last first-level gradient point in the sub-recursive interval are set as the second-level gradient points;
   when the difference between the first-level gradient points in the recursive interval is greater than or equal to the difference threshold, dividing and recurving are continued.

6. The method for screening gradient points based on electronic horizon data according to any one of claims 3 to 5, wherein: a calculation formula of the linear gradient value of the gradient point is:

$$y_i = \frac{s_m - s_1}{o_m - o_1} x_i - \frac{s_m - s_1}{o_m - o_1} o_1 + s_1$$

   where, subscript i=1,2,...,m represents a serial number of each gradient point in the recursive interval sorted according a corresponding road offset value; m represents a total number of the gradient points in the recursive interval; $y_i$ represents the first linear gradient value of an i-th gradient point; $x_i$ represents the road offset value corresponding to the i-th gradient point; $s_1$ and $s_m$ represent the actual gradient values of the first and an m-th gradient points, respectively, $o_1$ and $o_m$ represent the first road offset values corresponding to the first and the m-th gradient points, respectively.

7. The method for screening gradient points based on electronic horizon data according to any one of claims 1 to 5, wherein the derivative threshold is less than 0.01.

8. The method for screening gradient points based on electronic horizon data according to any one of claims 1 to 5, wherein the difference threshold is less than 0.1.

9. A terminal device, comprising a processor, a memory, and a computer program stored in the memory and executed on the processor, wherein when the computer program is executed on the processor, the steps of the method according to any one of claims 1 to 8 are implemented.

10. A computer-readable storage medium storing a computer program, wherein: when the computer program is executed by a processor, the steps of the method according to any one of claims 1 to 8 are implemented.

11. A method for calculating a gradient based on discrete gradient points, comprising:

collecting, by a central control terminal, electronic horizon data;
sending the discrete gradient points to each electronic control unit, after screening all the gradient points in the electronic horizon data as the discrete gradient points according to the method for screening gradient points based on electronic horizon data according to any one of claims 1 to 8;
recalculating the gradient values of the gradient points between adjacent discrete gradient points according to the gradient value of each discrete gradient point and the corresponding road offset value, after receiving, by the each electronic control unit, the discrete gradient points.

12. The method for calculating a gradient based on discrete gradient points according to claim 11, wherein a calculation method for recalculating the gradient values of the gradient points between adjacent discrete gradient points is:

calculating a linear gradient value of each gradient point based on a linear relationship of the each gradient point between the adjacent discrete gradient points; and
taking the linear gradient value as the gradient value of the each gradient point.

13. The method for calculating a gradient based on discrete gradient points according to claim 12, wherein a calculation formula for recalculating the linear gradient value of the each gradient point between the adjacent discrete gradient points is:

$$y = \frac{s_b - s_a}{o_b - o_a} x - \frac{s_b - s_a}{o_b - o_a} o_a + s_a$$

where, y represents the linear gradient value of the each gradient point to be calculated; x represents the road offset value corresponding to the each gradient point to be calculated; $s_a$ and $s_b$ respectively represent the actual gradient values of two adjacent discrete gradient points; $o_a$ and $o_b$ respectively represent the road offset values corresponding to the two adjacent discrete gradient points.

14. A system for calculating a gradient based on discrete gradient points, comprising a central control terminal and a plurality of electronic control units, wherein the central control terminal and each electronic control unit comprise a memory, a processor, a data transmission module and a computer program stored in the memory and executed on the processor;

after electronic horizon data is received by the central control terminal through the data transmission module, the computer program stored in a corresponding memory is executed by the processor in the central control terminal, such that the method for screening gradient points based on electronic horizon data according to any one of claims 1 to 8 is implemented, for screening all the gradient points in the electronic horizon data as the discrete gradient points, and then sending the discrete gradient points to the each electronic control unit through the data transmission module;
after each discrete gradient point is received by the electronic control unit through the data transmission module, the computer program stored in the corresponding memory is executed by the processor in the central control terminal, such that the gradient value of the gradient point between the adjacent discrete gradient points is recalculated, according to the gradient value of each discrete gradient point and a corresponding road offset value.

**15.** The system for calculating a gradient based on discrete gradient points according to claim 14, wherein a calculation formula for recalculating the gradient value of the gradient point between the adjacent discrete gradient points is:

calculating a linear gradient value of each gradient point based on a linear relationship of the each gradient point between the adjacent discrete gradient points; and
taking the linear gradient value as the gradient value of the each gradient point.

**16.** The system for calculating a gradient based on discrete gradient points according to claim 15, wherein a calculation formula for recalculating the linear gradient value of the each gradient point between the adjacent discrete gradient points is:

$$y = \frac{s_b - s_a}{o_b - o_a} x - \frac{s_b - s_a}{o_b - o_a} o_a + s_a$$

where, y represents the linear gradient value of the each gradient point to be calculated; x represents the road offset value corresponding to the each gradient point to be calculated; $s_a$ and $s_b$ respectively represent the actual gradient values of two adjacent discrete gradient points; $o_a$ and $o_b$ respectively represent the road offset values corresponding to the two adjacent discrete gradient points.

100m    P₁(offset = 100, slp = 0.10)

Road Starting Point
offset = 0

50m    P₂(offset = 150, slp = 0.13)

# FIG. 1

Screening out from the electronic horizon data that the slope point of which the first derivative with respect to the road offset value is greater than or equal to the derivative threshold value is a first-order slope point.

From said first grade slope point, a second grade slope point is screened out according to a difference value of road offset values corresponding to two adjacent first grade slope points, and the second grade slope point is taken as a screened discrete slope point.

# FIG. 2

## INTERNATIONAL SEARCH REPORT

| International application No. |
| --- |
| **PCT/CN2020/109684** |

| A. CLASSIFICATION OF SUBJECT MATTER |
| --- |
| G01C 21/32(2006.01)i;  G06F 17/00(2019.01)i;  B60W 40/076(2012.01)i |
| According to International Patent Classification (IPC) or to both national classification and IPC |

| B. FIELDS SEARCHED |
| --- |
| Minimum documentation searched (classification system followed by classification symbols) |
| G01C, G06F, B60W; CPC:G06F17/30241 |
| Documentation searched other than minimum documentation to the extent that such documents are included in the fields searched |
| Electronic data base consulted during the international search (name of data base and, where practicable, search terms used) |
| CNABS, CNKI, CNTXT, VEN: 厦门雅迅网络股份有限公司, 涂岩恺, 周贺杰, 坡度, 坡道, 点, 筛选, 抽稀, 降低, 减小, 低, 小, 少, 数据量, 计算量, 数据, 一级, 二级, 一次, 二次; gradient, slope, point, screen, rarefy, reduce, data, first, second |

| C. DOCUMENTS CONSIDERED TO BE RELEVANT |  |  |
| --- | --- | --- |
| Category* | Citation of document, with indication, where appropriate, of the relevant passages | Relevant to claim No. |
| Y | CN 105677899 A (SOUTHEAST UNIVERSITY) 15 June 2016 (2016-06-15) description, paragraphs 0039-0052 | 1-2, 7-11, 14 |
| Y | CN 110893853 A (XIAMEN YAXON NETWORKS CO., LTD.) 20 March 2020 (2020-03-20) description, paragraph [0002] | 1-2, 7-11, 14 |
| A | CN 104036688 A (XIAMEN YAXON NETWORKS CO., LTD.) 10 September 2014 (2014-09-10) entire document | 1-16 |
| A | CN 103839228 A (XIAMEN YAXON NETWORKS CO., LTD.) 04 June 2014 (2014-06-04) entire document | 1-16 |
| A | CN 103823854 A (XIAMEN YAXON NETWORKS CO., LTD.) 28 May 2014 (2014-05-28) entire document | 1-16 |
| A | CN 104797483 A (BOSCH ROBERT GMBH) 22 July 2015 (2015-07-22) entire document | 1-16 |
| A | CN 109029387 A (HARBIN ENGINEERING UNIVERSITY) 18 December 2018 (2018-12-18) entire document | 1-16 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 December 2020** | **04 January 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2020/109684** |

**C.** **DOCUMENTS CONSIDERED TO BE RELEVANT**

| Category* | Citation of document, with indication, where appropriate, of the relevant passages | Relevant to claim No. |
|---|---|---|
| A | JP 4546207 B2 (NEC PERSONAL PRODUCTS CO., LTD.) 15 September 2010 (2010-09-15) entire document | 1-16 |

Form PCT/ISA/210 (second sheet) (January 2015)

**INTERNATIONAL SEARCH REPORT**
Information on patent family members

| International application No. |
| --- |
| **PCT/CN2020/109684** |

| Patent document cited in search report | | | Publication date (day/month/year) | Patent family member(s) | | | Publication date (day/month/year) |
| --- | --- | --- | --- | --- | --- | --- | --- |
| CN | 105677899 | A | 15 June 2016 | CN | 105677899 | B | 29 January 2019 |
| CN | 110893853 | A | 20 March 2020 | None | | | |
| CN | 104036688 | A | 10 September 2014 | CN | 104036688 | B | 14 May 2019 |
| CN | 103839228 | A | 04 June 2014 | CN | 103839228 | B | 06 July 2016 |
| CN | 103823854 | A | 28 May 2014 | CN | 103823854 | B | 02 July 2019 |
| CN | 104797483 | A | 22 July 2015 | WO | 2014078675 | A1 | 22 May 2014 |
| | | | | US | 2014136043 | A1 | 15 May 2014 |
| CN | 109029387 | A | 18 December 2018 | None | | | |
| JP | 4546207 | B2 | 15 September 2010 | JP | 2006101236 | A | 13 April 2006 |

Form PCT/ISA/210 (patent family annex) (January 2015)